**Europäisches Patentamt**

**European Patent Office**

**Office européen des brevets**

(19)

(11) Veröffentlichungsnummer : **0 333 708 B1**

# EUROPÄISCHE PATENTSCHRIFT

(12)

(45) Veröffentlichungstag der Patentschrift :
**05.06.91 Patentblatt 91/23**

(51) Int. Cl.$^5$ : **B60C 23/04**

(21) Anmeldenummer : **87904843.7**

(22) Anmeldetag : **04.08.87**

(86) Internationale Anmeldenummer :
**PCT/DE87/00341**

(87) Internationale Veröffentlichungsnummer :
**WO 88/03879 02.06.88 Gazette 88/12**

(54) **REIFENDRUCKSENSOR FÜR KRAFTFAHRZEUGE.**

(30) Priorität : **20.11.86 DE 3639688**

(43) Veröffentlichungstag der Anmeldung :
**27.09.89 Patentblatt 89/39**

(45) Bekanntmachung des Hinweises auf die
Patenterteilung :
**05.06.91 Patentblatt 91/23**

(84) Benannte Vertragsstaaten :
**AT DE FR GB IT SE**

(56) Entgegenhaltungen :
**EP-A- 0 020 809**
**DE-A- 2 832 447**
**DE-A- 3 310 052**

(73) Patentinhaber : **ROBERT BOSCH GMBH**
**Postfach 50**
**W-7000 Stuttgart 1 (DE)**

(72) Erfinder : **ALBERTER, Günther**
**Nordring 122**
**W-8500 Nürnberg (DE)**
Erfinder : **DEEG, Helmut**
**Ohmstrasse 73**
**W-8502 Zirndorf (DE)**
Erfinder : **HETTICH, Gerhard**
**Martin-Renz-Strasse 8**
**W-8501 Dietenhofen (DE)**
Erfinder : **NEIDHARD, Klaus**
**Kiefernschlag 13**
**W-8508 Wendelstein (DE)**
Erfinder : **SCHMID, Hans-Dieter**
**Kamenzerstrasse 8**
**W-8500 Nürnberg 60 (DE)**
Erfinder : **SCHRUMPF, Hans**
**Hebelstrasse 5**
**W-8507 Oberasbach (DE)**

## Beschreibung

### Stand der Technik

Die Erfindung geht aus von einem Reifendrucksensor für Kraftfahrzeuge nach der Gattung des Patentanspruchs 1.

Aus der DE-A-28 32 447 ist es bekannt, einen Reifendrucksensor mit einen vom Reifendruck zu betätigenden Druckschalter zur Überwachung des Luftdrucks im Reifen am Umfang einer Radfelge einzuschrauben. Der Druckschalter besteht dort zum einen aus eineer elektrisch leitenden Membran, die eine mit Gas gefüllte Referenzdruckkammer zum Reifen hin abschließt, und zum anderen aus einem Kontaktstift, der in der Referenzdruckkammer elektrisch isoliert in einer Glasdurchführung eingeschmolzen ist und an dem sich zur Schließung eines Stromkreises der mittlere Bereich der Membran bei ausreichendem Luftdruck im Reifen anlegt. Die Referenzdruckkammer wird über einen Kanal mit Luft oder Stickstoff auf einen gewünschten Referenzudruck gefüllt und danach druckdicht verschlossen. Der Referenzdruck ist so gewählt, daß bei ausreichendem Luftdruck im Reifen die Membran am Ende des Kontaktstiftes anliegt. Fällt dagegen der Luftdruck im Reifen unter einen durch den Referenzdruck vorgegebenen Mindestdruck, so hebt die Membran vom Kontaktstift ab und öffnet einen im Reifendrucksensor angeordneten Schwingkreis aus einer Spule und einem Kondensator. Über eine hochfrequente Schwingung der im Fahrzeug fest angeordneten Auswerteschaltung läßt sich mit einem in Radnähe angeordneten Signalaufnehmer bei Vorbeilaufen des Reifendrucksensors mit jeder Radumdrehung feststellen, ob der Druckschalter geschlossen ist.

Derartige bekannte Ausführungen haben den Nachteil, daß das Gas in der Referenzdruckkammer während der Fertigung des Reifendrucksensors eingefüllt, der Sensor dabei auf einen bestimmten Referenzdruck eingestellt und die Referenzdruckkammer dann gasdicht verschweißt wird, so daß eine spätere Anpassung des Referenzdruckes auf unterschiedliche, vom Fahrzeugtyp, vom Reifen, von der Geschwindigkeit oder der Beladung des Fahrzeugs vorgegebenen Wert nicht mehr möglich ist. Es müssen daher eine Anzahl Drucksensoren mit verschiedenen Referenzdrücken hergestellt und auf Lager gehalten werden.

Bei einer anderen, aus der DE-C-33 10 052 bekannten Lösung ist der Referenzdruck in der Referenzdruckkammer des Reifendrucksensors variabel einstellbar, indem beim Befüllvorgang des Reifens der Reifendruck über eine Ventilanordnung gleichzeitig als neuer Referenzdruck für die Referenzdruckkammer festgehalten wird. Dies hat jedoch den Nachteil, daß die Ventilanordnung nicht die für die Lebensdauer des Reifendrucksensors benötigte Abdichtung der Referenzdurckkammer gewährleistet, so daß bei einer auftretenden Druckdifferenz zwischen Referenzdruckkammer und Reifen bei undichtem Ventil Luft aus der Referenzdruckkammer entweicht, ohne daß dieser Defekt bemerkt wird. Die Anzeige eines zu geringen Reifendrucks bei allmählichem Druckabfall im Reifen wird dann nicht mehr angezeigt.

Mit der vorliegenden Erfindung wird angestrebt, einen Reifendrucksensor mit gasdicht abgeschlossenem Referenzvolumen derart weiterzubilden, daß er sich auf unterschiedliche Referenzdrücke fest einstellen läßt.

### Vorteile der Erfindung

Die erfindungsgemäße Ausbildung des Reifendrucksensors mit den kennzeichnenden Merkmalen des Patentanspruchs 1 hat den Vorteil, daß nur eine einzige Ausführung des Reifendrucksensors für die verschiedenen gewünschten Referenzdrücke benötigt wird, so daß der Aufwand in der Fertigung und Lagerhaltung erheblich verringert werden kann. Der Druck in der Referenzdruckkammer kann nunmehr fahrzeugspezifisch vor dem Einbau des Reifendrucksensors am Fahrzeugrad auf den gewünschten Wert kalibriert werden. Ein weiterer Vorteil besteht darin, daß die Einfüllöffnung nach dem Einfüllen des Gases in die Referenzdruckkammer druckdicht verschlossen wird, so daß der später eingestellte Referenzdruck danach unverändert beibehalten wird.

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist, daß die Referenzdruckkammer über mindestens eine Öffnung mit einer im Gehäuse des Reifendrucksensors angeordneten, abgeschlossenen weiteren Druckkammer in Verbindung steht, deren Volumen zum Einstellen des gewünschten Referenzdrucks durch Verformen veränderbar ist. Dabei ist es grundsätzlich möglich, sowohl von einem geringen Druck in der Referenzdruckkammer ausgehend durch Zusammendrücken der weiteren Druckkammer den gewünschten Referenzdruck einzustellen, als auch ausgehend von einem höheren Druck durch Aufweiten der weiteren Druckkammer diesen Referenzdruck zu erzielen. Es ist sehr zweckmäßig, wenn die weitere Druckkammer auf der der Membrane abgewandten Stirnseite der Referenzdruckkammer angeordnet ist und einen in Achsrichtung der Referenzdruckkammer zusammendrückbaren Faltenbalg aufweist. Der Faltenbalg liegt dabei in vorteilhafter Weise mit einem Ende an der mit der Öffnung versehenen Stirnseite der Referenzdruckkammer und mit dem anderen Ende an einer Abschlußplatte an, wobei Referenzdruckkammer und Abschlußplatte im Gehäuse des Reifendrucksensors axial zueinander verschiebbar sind.

## Zeichnung

Einige Ausführungsbeispiele der Erfindung sind in der Zeichnung dargestellt und in der nachfolgenden Beschreibung näher erläutert. Es zeigen Figur 1 den Ausschnitt eines Fahrzeugrades mit einem in der Felge eingesetzten, erfindungsgemäßen Reifendrucksensor, Figur 2 einen Querschnitt durch eine erste Ausführungsform des erfindungsgemäßen Reifendrucksensors in vergrößerter Darstellung, Figur 3 eine zweite Ausführungsform des bis zur Hälfte im Querschnitt dargestellten Reifendrucksensors in vergrößertem Maßstab, Figur 4 eine weitere Ausführungsform mit einer zusätzlichen Druckkammer und Figur 5 eine weitere Ausführungsform des Reifendrucksensors mit einer Justierschraube für den Referenzdruck in vereinfachter Darstellung.

## Beschreibung der Ausführungsbeispiele

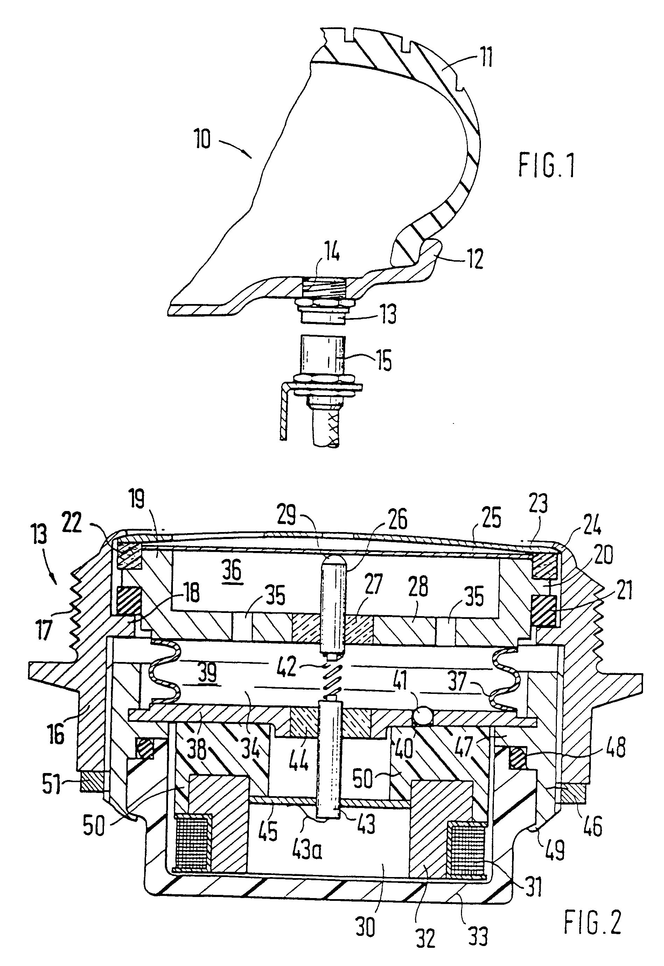

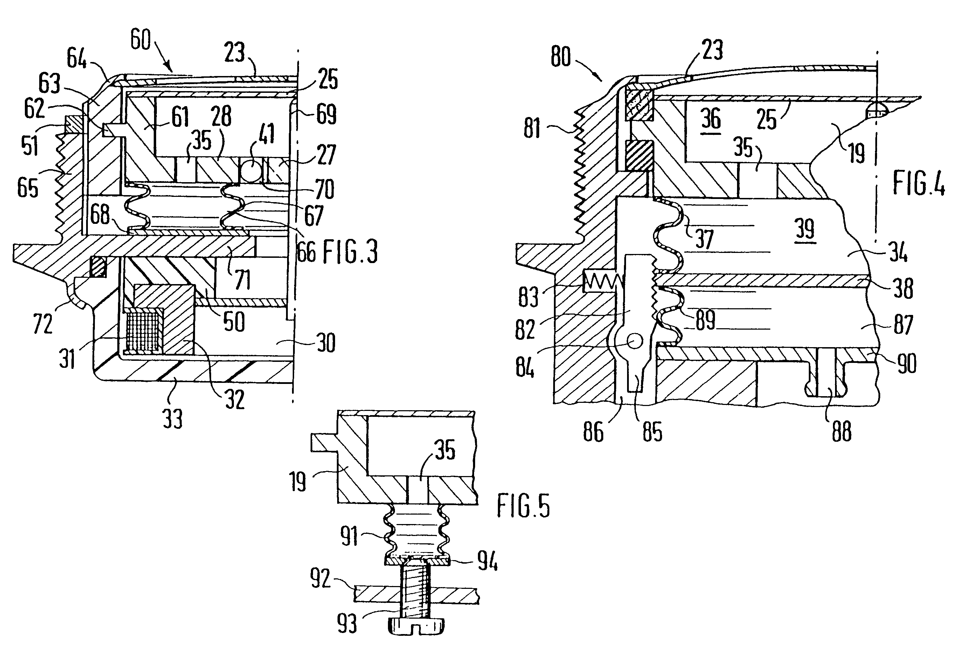

In Figur 1 ist der Ausschnitt eines Kraftfahrzeugrades in verkleinertem Maßstab im Querschnitt dargestellt und mit 10 bezeichnet. Er zeigt einen Reifen 11, der auf einer Radfelge 12 befestigt ist. An einem nach innen gerichteten Abschnitt der Radfelge 12 ist ein Reifendrucksensor 13 in einer Gewindebohrung 14 der Radfelge 12 eingeschraubt. In geringem Abstand dazu ist im Bereich des Reifendrucksensors 13 an der nicht dargestellten Radaufhängung des Fahrzeugs ein Signalaufnehmer 15 befestigt dessen Stirnseite zum Reifendrucksensor 13 hin gerichtet ist und eine hochfrequente Schwingung in den Reifendrucksensor 13 einkoppelt, wenn dieser bei jeder Umdrehung des Fahrzeugrades 10 an ihm vorbeibewegt wird.

Der Aufbau eines solchen Reifendrucksensors 13 ist in Figur 2 dargestellt. Er besteht aus einem Sensorgehäuse 16 aus Edelstahl, welches einen Gewindeansatz 17 zur Befestigung an der Radfelge 12 aufweist. Das Sensorgehäuse 16 ist vorn zum Reifen 11 hin offen. Im mittleren Bereich des Sensorgehäuses 16 befindet sich innen eine Ringschulter 18. Eine Referenzdruckkammer 19 aus Stahl mit einem radial nach aaßen gerichteten Kragen 20 ist von vorn in das Sensorgehäuse 16 eingesetzt und stützt sich über einen Dichtring 21 an der Ringschulter 18 des Sensorgehäuses 16 ab. Die Referenzdruckkammer 19 trägt an ihrem Kragen 20 einen Abstandsring 22 aus Faserkunststoff. Darüber ist eine gelochte Abdeckscheibe 23 in die Öffnung des Sensorgehäuses 16 gelegt und durch einen Bördelrand 24 an der vorderen Stirnseite des Sensorgehäuses 16 werden diese Teile im Sensorgehäuse 16 eingespannt. Die Referenzdruckkammer 19 ist zum Reifeninneren 11 hin durch eine flache Membran 25 aus Stahl abgeschlossen. In der Mitte der Referenzdruckkammer 19 ist ein Kontaktstift 26 mit einer Glasdurchführung 27 am Boden 28 der Referenzdruckkammer druckdicht und elektrisch isoliert befestigt. An seinem vorderen Ende trägt der Kontaktstift 26 eine Kontaktspitze 29, die gemeinsam mit der Membran 25 einen von der Druckdifferenz auf beiden Seiten der Membran 25 abhängig betätigten Druckschalter bildet.

Im unteren Bereich das Sensorsgehäuses 16 befindet sich eine Schwingkreiskammer 30, in der eine zu einem Reihenschwingkreis verschaltete Ringspule 31 auf einem Ferritkern 32 und ein nicht erkennbarer, in der Kammer 30 eingesetzter Kondensator angeordnet ist. Diese Teile sind in einer Abdeckkappe 33 aus Kunststoff aufgenommen.

Zwischen der Referenzdruckkammer 19 und der Schwingkreiskammer 30 ist auf der der Membran 25 abgewandten Stirnseite der Referenzdruckkammer 19 eine weitere Druckkammer 34 angeordnet, die über zwei Öffnungen 35 im Boden 28 der Referenzdruckkammer 19 mit dem Druckraum 36 der Referenzdruckkammer 19 in Verbindung steht. Diese weitere Druckkammer 34 weist einen in Achsrichtung der Referenzdruckkammer 19 zusammendrückbaren Faltenbalg 37 auf. Der Faltenbalg 37 liegt mit seinem oberen Ende an der Stirnseite der Referenzdruckkammer 19 und mit seinem anderen Ende an einer Abschlußplatte 38 gasdicht an, wobei die Öffnungen 35 im Boden 28 der Referenzdruckkammer 19 von dem Faltenbalg 37 umschlossen sind. Über die Öffnungen 35 steht der Druckraum 36 der Referenzdruckkammer 19 mit dem Druckraum 39 der weiteren Druckkammer 34 ständig in Verbindung. Sie bilden ein Referenzvolumen, welches vor dem Einsetzen der Referenzdruckkammer 19 mit der Druckkammer 34 in das Sensorgehäuse 16 über eine Einfüllöffnung 40 in der Abschlußplatte 38 mit einem Referenzgas, z.B. Stickstoff gefüllt wird. Der Druck des Gases in dem Referenzvolumen wird dabei so gewählt, daß er unterhalb des später gewünschten Referenzdruckes liegt. Danach wird die Einfüllöffnung 40 durch eine darin eingepreßte und verschweißte Stahlkugel 41 druckdicht verschlossen. Der Kontaktstift 26 ist mit seinem unteren Ende über eine Schraubenfeder 42 mit einem Anschluffstift 43 elektrisch verbunden, der in einer Glasdurchführung 44 in der Abschlußplatte 38 elektrisch isoliert und druckdicht befestigt ist. Das freie Ende dieses Anschluffstiltes 43 ist über einen flexiblen Draht 43a an einer Anschlußplatte 45 mit dem Schwingkreis in der Schwingkreiskammer 30 verbunden.

Um den gewünschten Referenzdruck in der Referenzdruckkammer 19 einstellen zu können, ist vorgesehen, das Referenzvolumen durch Verformen der weiteren Druckkammer 34 zu verändern, indem der Faltenbalg 37 axial zusammengedrückt wird. Dafür ist ein Spannring 46 vorgesehen, der mit einer ringförmig nach innen vorstehenden Auflage 47 die Abschlußplatte 38 der weiteren Druckkammer 34 trägt und der von unten in das Sensorgehäuse 16 eingesetzt, vorzugsweise eingepreßt ist. Ferner ist die Abdeckkappe 33 durch einen Dichtring 48 gegen den Spannring 46 abgedichtet und von einem Bördelrand 49 des Spannrings 46 eingespannt. Ein Tragkörper 50 aus Kunststoff für den Ferritkern 32 und die Ringspule 31 stützt sich an der Rückseite der Abschlußplatte 38 ab.

Bei der Herstellung des Reifendrucksensors 13 wird der Spannring 46 nach dem Einfüllen des Gases in Druckräume 36, 39 der Referenzdruckkammer 19 und der weiteren Druckkammer 34 und nach dem Verschließen der Einfüllöffnung 40 etwa bis zur Hälfte in das Sensorgehäuse 16 eingepreßt. Vor dem endgültigen Einbau des Reifendrucksensors 13 in die Radfelge 12 muß fahrzeugspezifisch der gewünschte Referenzdruck ermittelt werden und dieser wird nun beispielsweise in einer dafür geeigneten Druckvorrichtung von außen auf die Membran 25 aufgebracht. Nun wird von hinten der Spannring 46 durch ein entsprechendes Werkzeug soweit in das Sensorgehäuse 16 eingedrückt, bis sich durch die über die Ringauflage 47 axial zur Referenzdruckkammer 19 verschiebbare Abschlußplatte 38 der Referenzdruck durch Verringerung des Referenzvolumens soweit erhöht, daß die Membran 25 von der Kontaktspitze 29 abhebt. Zu diesem Zeitpunkt ist die Druckdifferenz auf beiden Seiten der Membran 25 gleich Null, d.h., daß der gewünschte Referenzdruck nunmehr in der Referenzdruckkammer 19 eingestellt ist. Das Abheben der Membran 25 von der Kontaktspitze 29 läßt sich durch eine an der Ringspule 31 der Schwingkreiskammer 30 eingekoppelte Schwingung detektieren. Der Spannring 46 wird nun in dieser Position durch einen Kontermutter 51 am Sensorgehäuse 16 fixiert. Dadurch wird eine bleibende Verformung des Faltenbalgs 37 bzw. Veränderung des Referenzvolumens zur Kalibrierung des Reifendrucksensors 13 auf den gewünschten Referenzdruck bewirkt.

Bei der Ausführung nach Figur 2 kann der gewünschte Referenzdruck auch nach dem Einsetzen des Reifendrucksensors 13 an der Radfelge 12 von außen eingestellt werden, indem zunächst der gewünschte Referenzdruck im Reifen hergestellt wird und anschließend durch axiales Zusammendrücken der weiteren Druckkammer 30 über den Spannring 46 das Referenzvolumen soweit verkleinert wird, bis beim gewünschten Referenzdruck die Membran 25 vom Kontaktstift 26 abhebt. Gegebenenfalls kann der Spannring auch mit einem Gewinde in das Sensorgehäuse 16 zur Einstellung des Referenzdruckes eingeschraubt und anschließend gesichert werden. Bei einer solchen Ausführung ist es möglich, den Referenzdruck auch noch zu einem späteren Zeitpunkt zu verändern, indem zunächst die Sicherung entfernt wird, um dann durch Ein- oder Ausschrauben des Spannrings 46 am Sensorgehäuse 16 eine neue Kalibrierung des Referenzdruckes vorzunehmen.

Die Einstellung des gewünschten Referenzdrucks läßt sich auf verschiedene Weise realisieren, sofern die Referenzdruckkammer 19 und die Abschlußplatte 38 der weiteren Druckkammer 34 im Sensorgehäuse durch einen Spannring oder dgl. relativ zueinander axial verschiebbar sind. Demzufolge kann die Konstruktion auch so gewählt werden, daß der Spannring an der zum Reifen hin gerichteten Öffnung des Sensorgehäuses 16 eingesetzt wird.

Die Ausführungsform nach Figur 3 zeigt eine solche Anordnung, wobei wegen der symmetrischen Konstruktionsaufbaues nur die rechte Hälfte des Reifendrucksensors 60 im Querschnitt vergrößert dargestellt ist. Hier ist eine Referenzdruckkammer 61 mit ihrem nach außen gerichteten Kragen 62 in einem Spannring 63 aufgenommen, der vorn mit einem Bördelrand 64 die Abdeckscheibe 23 zum Schutz der Membran 25 hält und der von oben her in das Sensorgehäuse 65 eingesetzt wird. An der Rückseite der Referenzdruckkammer 61 ist eine ringförmige weitere Druckkammer 66 angeordnet, die aus einem ringförmig um den aus der Referenzdruckkammer 61 druckdicht herausgeführten Kontaktstift 69 angeordneten Faltenbalg 67 besteht, der sich einerseits gegen die Referenzdruckkammer 61 und andererseits gegen eine entsprechend ringförmige Abschlußplatte 68 abstützt. Dadurch ist es möglich, den Kontaktstift 69 der Referenzdruckkammer 61 über die Glasdurchführung 27 einstückig bis in die Schwingkreiskammer 30 zu führen. Außerdem kann hier die Einfüllöffnung 70 für das Referenzgas im Boden 28 der Referenzdruckkammer 61 unmittelbar neben der Glasdurchführung 27 angeordnet sein, ohne daß sie von der ringförmigen Druckkammer 66 abgedeck ist. Referenzdruckkammer 61 und ringförmige Druckkammer 66 haben auch hier über die Öffnungen 35 im Boden 28 der Referenzdruckkammer 61 Verbindung miteinander. Die ringförmige Abschlußplatte 68 liegt auf einer sehr weit nach innen reichenden Ringschulter 71 des Sensorgehäuses 65 auf. Darunter liegt die Schwingkreiskammer 30 mit ihrer Ringspule 31, dem Ferritkern 32, dem Tragkörper 50 und dem nicht erkennbaren Kondensator. Die Abdeckkappe 33 ist hier von einem Bördelrand 72 des Sensorgehäuses 65 eingefaßt.

Bei der Herstellung des Reifendrucksensors 60 wird zunächst eine vorgefertigte Einheit aus Spannring 63, Referenzdruckkammer 61, Abdeckscheibe 23 und ringförmiger Druckkammer 66 von oben in die Öffnung des Sensorgehäuses 65 eingesetzt, wobei der Spannring 63 etwa bis zur Hälfte in das Sensorgehäuse 65 eingesetzt wird. Über die Einfüllöffnung 70 wird die Referenzdruckkammer 61 und die Ringdruckkammer 66 mit Gas auf einen unteren Grenzwert der verschiedenen Referenzdrücke gefüllt und anschließend wird die Einfüllöffnung 70 mit der Kugel 41 druckdicht verschlossen. Anschließend wird die Schwingkreiskammer 30 an der Rückseite der Ringschulter 71 angeordnet und durch den Bördelrand 72 des Sensorgehäuses 65 dort befestigt. Vor dem Einbau des Reifendrucksensors 60 kann nun durch die mit dem Spannring 63 gegen die im Sensorgehäuse 65 fest aufliegende Abschluffplatte 38 axial verschiebbare Referenzdruckkammer 61 durch weiteres Einpressen des Spannringes 63 der Referenzdruck auf den gewünschten Wert erhöht werden.

Auch hier wird die endgültige Stellung des Spannrings 63 durch einen Sicherungsring 51 am Sensorgehäuse 65 fixiert. Der Spannring 63 kann in das Sensorgehäuse 65 auch mittels eines Gewindes eigeschraubt werden. In diesem Fall kann anstelle des Sicherungsringes 51 eine Kontermutter verwendet werden.

Figur 4 zeit den prinzipiellen Aufbau einer weiteren Ausführungsform eines Reifendrucksensors 80, der, soweit er mit dem Ausführungsbeispiel nach Figur 2 übereinstimmt, mit gleichen Bezugszablen versehen ist. So ist in Figur 4 die Referenzdruckkammer 19 in gleicher Weise wie in Figur 2 in den oberen Abschnitt des Sensorgehäuses 81 befestigt. Die weitere Druckkammer 34 ist hier jedoch nicht wie in Figur 2 über die Abschlußplatte 18 an einem Spannring befestigt sondern sie wird von einer Rastsperre 82 gehalten, die im Sensorgehäuse 81 schwenkbar gelagert ist und mit der Kraft einer am Sensorgehäuse 81 abgestützten Druckfeder 83 sich gegen den äußeren Rand der Abschlußplatte 38 anlegt. Durch die Rastsperre 82 wird die Abschlußplatte 38 gegen axiales Verschieben gesichert. Die Rastsperre 82 hat unterhalb ihrer Lagerstelle 84 einen nach unten gerichteten Fortsatz 85, der in einer Gehäuseöffnung 86 angeordnet ist. Durch Einsetzen eines Schraubendrehers in diese Gehäuseöffnung 86 kann die Rastsperre 82 mit dem Fortsatz 85 entriegelt werden, so daß die Abschlußplatte 38 der weiteren Druckkammer 34 zur Einstellung eines gewünschten Referenzdruckes in der Referenzdruckkammer 19 axial verschiebbar ist.

Zu diesem Zweck ist an der Rückseite der Abschlußplatte 38 eine zusätzliche Druckkammer 87 angeordnet, die über eine nach außen führende Öffnung 88 in Form eines Anschlußnippels mit Druckluft zu füllen ist. Diese zusätzliche Druckkammer 87 besteht ebenfalls aus einem Faltenbalg 89, der sich nach oben gegen die Rückseite der Abschlußplatte 38 abstützt und nach unten mit einer Grundplatte 90 verschlossen ist, welche die Öffnung 88 trägt. Die Grundplatte 90 ist am Sensorgehäuse 81 befestigt bzw. sie stützt sich nach unten dagegen ab.

Wird nun diese zusätzliche Druckkammer 87 über die Öffnung 88 mit Druckluft gefüllt, so wird mit diesem Druck bei entriegelter Rastsperre 82 die Abschlußplatte 38 in Achsrichtung des Reifendrucksensors 80 hochgedrückt. Dadurch wird das Referenzvolumen der Druckräume 36 und 39 verringert und das dort vor dem Zusammenbau eingefüllte Gas wird komprimiert. Der gewünschte Referenzdruck läßt sich nun ebenso wie zu Figur 2 beschrieben, durch Anheben der Abschlußplatte 38 einstellen, indem aunmehr die zusätzliche Druckkammer 87 mit dem gleichen Druck gefüllt wird. Danach wird die Rastsperre 82 wieder an den Rand der Abschlußplatte 38 eingerastet und damit die Abschlußplatte 38 gegen axiales Verschieben gesichert. Die Druckluft kann nun wieder aus der zusätzlichen Druckkammer 87 entweichen, ohne daß dadurch der Referenzdruck verändert wird.

In vorteilhafter Weise kann der Druckluftanschluß an der zusätzlichen Druckkammer 87 so ausgebildet werden, daß er von außen zugänglich ist und durch ein Reifenfüllgerät mit Druckluft beaufschlagt werden kann. Soll der Referenzdruck später nicht mehr verändert werden, so ist die Gehäuseöffnung 86 nach der Kalibrierung des Referenzdruckes fest zu verschließen bzw. zu versiegeln.

Eine weitere prinzipielle Lösungsmöglichkeit des Erfindungsvorschlages ist in Figur 5 dargestellt. Sie zeigt die Referenzdruckkammer 19 im Bereich der Bodenöffnung 35. An der Rückseite der Referenzdruckkammer 19 ist eine die Öffnung 35 einfassende Wellmembran 91 vorgesehen, die eine weitere Druckkammer mit veränderlichem Volumen darstellt. Durch eine im Sensorgehäuse 92 einschraubbare Justierschraube 93 wird über eine Abschlußplatte 94 die Wellmembran 91 zusammengedrückt und damit der Druck in der Referenzdruckkammer 19 auf den gewünschten Wert eingestellt. Die Justierschraube 93 wird zweckmäßigerweise anschließend versiegelt, um den eingestellten Referenzdruck nicht mehr versehentlich verändern zu können.

Das Lösungsprinzip der vorliegenden Erfindung ist nicht auf die dargestellten Ausführungsbeispiele beschränkt, da im Rahmen der Erfindung konstruktive Alternativlösungen möglich sind. Wesentlich ist jedoch, zur Einstellung des gewünschten Referenzdruckes in der. Referenzdruckkammer des Reifendrucksensors das mit dem Gas gefüllte Referenzvolumen zu verändern und beim Erreichen des gewünschten Referenzdrucks das Referenzvolumen zu fixieren. Dies kann gemäß den Ausführungsbeispielen durch eine weitere Druckkammer mit veränderbarem Volumen aber ebenso auch durch ein veränderliches Volumen in der Referenzdruckkammer selbst erzielt werden.

## Ansprüche

1. Reifendrucksensor (13) für Kraftfahrzeuge mit einem am Umfang einer Radfelge (12) zu befestigenden, von dem Luftdruck im Reifen (11) zu betätigenden Druckschalter, der zur Überwachung des Reifendruckes eine Referenzdruckkammer (19, 61) aufweist, deren druckdicht geschlossenes Referenzvolumen (36, 39) mit einem Gas gefüllt ist und die zum Reifen hin durch eine elektrisch leitende Membran (25) abgeschlossen ist, sowie einen Kontaktstift (26) trägt, an dem sich bei ausreichendem Luftdruck im Reifen der mittlere Bereich der Membran zum Schließen eines Sensorstromkreises anlegt, dadurch gekennzeichnet, daß zur Einstellung des gewünschten Referenzdruckes in der Referenzdruckkammer (19, 61) das gesamte, mit dem Gas gefüllte Referenzvolumen (36, 39) durch Verformen mindestens eines Bereiches (37, 67, 91) der das Referenzvolumen (36, 39) umschließenden Teile (19, 25, 37, 38 ; 61, 67, 68; 91, 94) veränderbar ist.

2. Reifendrucksensor nach Anspruch 1, dadurch gekennzeichnet, daß die Referenzdruckkammer (19, 61) über mindestens eine Öffnung (35) mit einer im Gehäuse (16, 65, 81) des Reifendrucksensors (13, 60, 80) angeordneten, abgeschlossenen weiteren Druckkammer (34, 66) in Verbindung steht, deren Volumen (39) zum Einstellen des gewünschten Referenzdruckes durch Verformen veränderbar ist.

3. Reifendrucksensor nach Anspruch 2, dadurch gekennzeichnet, daß die weitere Druckkammer (34, 66) auf der der Membran (25) abgewandten Stirnseite der Referenzdruckkammer (19, 61) angeordnet ist und einen in Achsrichtung der Referenzdruckkammer (19, 61) zusammendrückbaren Faltenbalg (37, 67) aufweist.

4. Reifendrucksensor nach Anspruch 3, dadurch gekennzeichnet, daß der Faltenbalg (37, 67) mit einem Ende an der mit der Öffnung (35) versehenen Stirnseite der Referenzdruckkammer (19, 61) und mit dem anderen Ende an einer Abscblußplatte (38, 68) anliegt, wobei Referenzdruckkammer (19, 61) und Abschlußplatte (38, 68) im Sensorgehäuse (16, 65, 81) axial zueinander verschiebbar sind.

5. Reifendrucksensor nach Anspruch 4, dadurch gekennzeichnet, daß die Abschlußplatte (38, 68) der weiteren Druckkammer (34, 66) und die Referenzdruckkammer (19, 61) durch einen axial in das Sensorgehäuse (16, 65) eingesetzten Spannring (46, 63) relativ zueinander axial verschiebbar sind.

6. Reifendrucksensor nach Anspruch 5, dadurch gekennzeichnet, daß die Abscblußplatte (38) über eine Ringauflage (47) des Spannrings (46) gegen die im Sensorgehäuse (16) fest eingesetzte Referenzdruckkammer (19) axial verschiebbar ist (Figur 2).

7. Reifendrucksensor nach Anspruch 5, dadurch gekennzeichnet, daß die Referenzdruckkammer (61) mit einem vom Spannring (63) gegen die im Sensorgehäuse (65) fest aufliegende Abschußplatte (68) axial verscbiebbar ist (Figur 3).

8. Reifendrucksensor nach Anspruch 4, dadurch gekennzeichnet, daß der Faltenbalg (67) und die Abschlußplatte (68) ringförmig um den aus der Referenzdruckkammer (61) druckdicht herausgeführten Kontaktstift (69) angeordnet ist (Figur 3).

9. Reifendrucksensor nach einem der Ansprüche 4 bis 8, dadurch gekennzeichnet, daß die Abschlußplatte (38) der weiteren Druckkammer (34) eine druckdicht verschließbare Einfüllöffnung (40) für das Gas des Referenzvolumens aufweist (Figur 2).

10. Reifendrucksensor nach Anspruch 4, dadurch gekennzeichnet, daß an der Rückseite der Abschlußplatte (38) eine zusätzliche Druckkammer (87) angeordnet ist, die über eine Öffnung (88) mit Druckluft zu füllen ist, welche sich gegen das Sensorgehäuse (81) abstützt und mittels der die Abschlußplatte (38) axial verschiebbar ist. (Figur 4).

11. Reifendrucksensor nach Anspruch 10, dadurch gekennzeichnet, daß die Abschlußplatte (38) über eine lösbare Rastsperre (82) im Sensorgehäuse (81) gegen axiales Verschieben zu sichern ist.

12. Reifendrucksensor nach Anspruch 2, dadurch gekennzeichnet, daß ein an der Rückseite der Referenzdruckkammer (19) die Öffnung (35) einfassende, als weitere Druckkammer dienende Wellmembran (91) durch eine im Sensorgehäuse (92) einschraubbare Justierschraube (93) in ihrem Volumen zur Einstellung des Referenzdruckes veränderbar ist.

## Claims

1. Inflation pressure sensor (13) for motor vehicle having a pressure switch to be fastened to the circumference of a wheel rim (12), to be actuated by the air pressure in the tyre (11) and which, in order to monitor the tyre pressure, has a reference pressure chamber (19, 61), the pressure-tightly closed reference volume (36, 39) of which is filled with a gas and which is closed with respect to the tyre by an electrically conductive membrane (25), and carries a contact pin (26) on which the central region of the membrane for closing a sensor current circuit bears when there is sufficient air pressure in the tyre, characterised in that, in order to set the desired reference pressure in a reference pressure chamber (19, 61), the entire reference volume (36, 39) filled with the gas can be modified by deforming at least one region (37, 67, 91) of the parts (19, 25, 37, 38 ; 61, 67, 68 ; 91, 94) enclosing the reference volume (36, 39).

2. Inflation pressure sensor according to Claim 1, characterised in that the reference pressure chamber (19, 61) is connected via at least orifice (35) to a closed further pressure chamber (34, 66) arranged in the casing (16, 65, 81) of the inflation pressure sensor (13, 60, 80), it being possible to modify the volume (39) of the further pressure chamber (34, 66) by deformation in order to set the desired reference pressure.

3. Inflation pressure sensor according to Claim 2, characterised in that the further pressure chamber (34, 66) is arranged on that end side of the reference pressure chamber (19, 61) facing away from the membrane (25), and has a bellows (37, 67) which can be compressed in the axial direction of the reference pressure chamber (19, 61).

4. Inflation pressure sensor according to Claim 3, characterised in that the bellows (37, 67) bears with one end on that end side of the reference pressure chamber (19, 61) provided with the orifice (35), and with the other end on a cover plate (38, 68), it being possible for the reference pressure chamber (19, 61) and cover plate (38, 68) to be displaced axially relative to each other in the sensor casing (16, 65, 81).

5. Inflation pressure sensor according to Claim 4, characterised in that the cover plate (38, 68) of the further pressure chamber (34, 66), and the reference pressure chamber (19, 61) can be displaced axially relative to each other by a clamping ring (46, 63) inserted axially into the sensor casing (16, 65).

6. Inflation pressure sensor according to Claim 5, characterised in that the cover plate (38) can be displaced axially via an annular bearing surface (47) of the clamping ring (46) against the reference pressure chamber (19) inserted so as to be fixed in the sensor casing (16) (Figure 2).

7. Inflation pressure sensor according to Claim 5, characterised in that the reference pressure chamber (61) can be displaced axially with a [sic] by the clamping ring (63) against the cover plate (68) bearing in a fixed manner in the sensor casing (65) (Figure 3).

8. Inflation pressure sensor according to Claim 4, characterised in that the bellows (67) and the cover plate (68) are arranged annularly about the contact pin (69) guided in a pressure-tight manner out of the reference pressure chamber (61) (Figure 3).

9. Inflation pressure sensor according to one of Claims 4 to 8, characterised in that the cover plate (38) of the further pressure chamber (34) has a pressure-tightly closeable feed orifice (40) for the gas of the reference volume (Figure 2).

10. Inflation pressure sensor according to Claim 4, characterised in that, on the rear side of the cover plate (38), an additional pressure chamber (87) is arranged which can be filled with pressurised air via an orifice (88), which is supported against the sensor casing (81) and by means of which the cover plate (38) can be displaced axially (Figure 4).

11. Inflation pressure sensor according to Claim 10, characterised in that the cover plate (38) can be secured against axial displacement via a releasable catch lock (82) in the sensor casing (81).

12. Inflation pressure sensor according to Claim 2, characterised in that a corrugated membrane (91) surrounding the orifice (35) on the rear side of the reference pressure chamber (19) and serving as a further pressure chamber can be modified in terms of its volume by an adjusting screw (93) which can be screwed into the sensor casing (92) in order to set the reference pressure.

## Revendications

1. Détecteur (13) de pression de pneu pour véhicules à moteur avec un contacteur pneumatique actionnable par la pression d'air du pneu (11), à fixer à la périphérie d'une jante (12) qui présente une chambre de pression de référence (19, 61) pour surveiller la pression du pneu, dont le volume de référence (36, 39) hermétiquement fermé est rempli de gaz qui est fermée du côté du pneu par une membrane (25) conductrice électrique (25), et qui porte une tige de contact (26), sur laquelle repose la zone médiane de la membrane, quand la pression dans le pneu est suffisante, pour fermer un circuit du détecteur, caractérisé en ce que pour régler la pression de référence souhaitée dans la chambre de pression de référence (19, 61), on peut modifier l'ensemble du volume de référence (36, 39) rempli de gaz par déformation d'au moins une zone (37, 67, 91) des pièces (19, 25, 37, 38 ; 61, 67, 68 ; 91, 94) entourant le volume de référence (36, 39).

2. Détecteur de pression de pneu selon la revendication 1, caractérisé en ce que la chambre de pression de référence (19, 61) est en communication par au moins un orifice (35) avec une autre chambre de pression (34, 66) isolée disposée dans le boîtier (16, 65, 81) du détecteur de pression de pneu (13, 60, 80) dont on peut modifier le volume (39) par déformation pou ajuster la pression de référence souhaitée.

3. Détecteur de pression de pneu selon la revendication 2, caractérisé en ce qu'on place l'autre chambre de pression (34, 66) sur la face frontale de la chambre de pression de référence (19, 61) opposée à la membrane (25) et qu'elle présente un soufflet (34, 67) comprimable dans le sens axial de la chambre de pression de référence (19, 61).

4. Détecteur de pression de pneu selon la revendication 3, caractérisé en ce que le soufflet (37, 67) repose par une extrémité sur la face frontale de la chambre de pression de référence (19, 61) munie de l'ouverture (35) et par l'autre extrémité sur une plaque de fermeture (38, 68), en pouvant déplacer axialement l'une par rapport à l'autre la chambre de pression de référence (19, 61) et la plaque de fermeture (38, 68) dans le boîtier du détecteur (16, 65, 81).

5. Détecteur de pression de pneu selon la revendication 4, caractérisé en ce qu'on peut déplacer axialement l'une par rapport à l'autre la plaque de fermeture (38, 68) de l'autre chambre de pression (34, 66) et la chambre de pression de référence (19, 61) par une bague de contrainte (46, 63) placée axialement dans le boîtier de détecteur (16, 65).

6. Détecteur de pression de pneu selon la revendication 5, caractérisé en ce que la plaque d'appui (38) peut se déplacer axialement sur un appui annulaire (47) de la bague de contrainte (46) vis-à-vis de la chambre de pression de référence (19) fixée à demeure dans le boîtier de détecteur (16) (figure 2).

7. Détecteur de pression de pneu selon la revendication 5, caractérisé en ce qu'on peut déplacer axialement la chambre de pression de référence (61) avec une bague de contrainte (63) vis-à-vis de la plaque de fermeture (68) fixée à demeure dans le boîtier de détecteur (65) (figure 3).

8. Détecteur de pression de pneu selon la revendication 4, caractérisé en ce qu'on dispose le soufflet (67) et la plaque de fermeture (68) annulairement autour de la tige de contact (69) guidée en étanchéité vers l'extérieur de la chambre de pression de référence (61).

9. Détecteur de pression de pneu selon l'une des revendications 4 à 8, caractérisé en ce que la plaque de fermeture (38) de l'autre chambre de pression (34) présente un orifice de remplissage (40) scellable hermétiquement pour le gaz du volume de référence (figure 2).

10. Détecteur de pression de pneu selon la revendication 4, caractérisé en ce qu'on a placé sur la face dorsale de la plaque de fermeture (38) une chambre de pression supplémentaire (87), qu'on doit remplir d'air comprimé par un orifice (88), qui s'appuie sur le boîtier de détecteur (81) et par laquelle on peut déplacer axialement la plaque de fermeture (38).

11. Détecteur de pression de pneu selon la revendication 10, caractérisé en ce qu'on peut bloquer dans le boîtier de capteur (81), contre un déplacement axial la plaque de fermeture (38) par un arrêt à crans (82) déverrouillable.

12. Détecteur de pression de pneu selon la revendication 2, caractérisé en ce qu'on peut ajuster une membrane cannelée (91) servant de chambre de pression supplémentaire sur la face dorsale de la chambre de pression de référence (19) et entourant l'orifice (35), grâce à une vis de réglage (93) vissable dans le boîtier de détecteur (92), pour modifier le volume et régler la pression de référence.

FIG.1

FIG.2

FIG.3

FIG.4

FIG.5

EP 0 333 708 B1